# EUROPÄISCHE PATENTANMELDUNG

(11) **EP 1 048 901 A1**
(43) Veröffentlichungstag der Anmeldung: **02.11.2000**
(21) Anmeldenummer: 00106984.8
(22) Anmeldetag: 01.04.2000
(51) Int. Cl.: F23L 15/04, F23C 11/00, F23C 9/00

(54) **Hochtemperatur-Gaserhitzer**

(30) Priorität: 28.04.1999 DE 19919293
(71) Anmelder: Wünning, Joachim, Dr.-Ing., D-71229 Leonberg (DE)
(72) Erfinder: Wünning, Joachim, Dr.-Ing., D-71229 Leonberg (DE)
(74) Vertreter: Patentanwälte Rüger, Barthelt & Abel

(57) **Zusammenfassung**

Bei einer kompakten Wärmequelle (1) umgibt ein glocken- oder konusförmiger Rekuperator (3) die Brennkammer (4). Der Rekuperator (3) besteht aus axial gegeneinander verspannten Teilen (13, 16, 24), so dass die ständige Anlage einer mit Vorsprüngen (17) versehenen Trennwand (16) sowohl an einer glockenförmigen Außenwand (5) als auch an einer glockenförmigen Innenwand (23) sichergestellt ist.

## Beschreibung

Die Erfindung betrifft eine Wärmequelle, insbesondere zur Erzeugung von Hochtemperaturwärme.

Insbesondere bei der Blockheizkraftwerktechnik werden für die Umwandlung von Brennstoffenergie in Strom und Heizwärme in kleinen, dezentralen Einheiten Wärmequellen für Temperaturen bis ca. 1000°C benötigt. Das Ziel ist hier ein hoher Wirkungsgrad, auch bei kleinen Einheiten. Außerdem werden niedrige Emissionen (NOₓ und CO) gewünscht. Gerade für den Einsatz bei Gebäudeheizungen wird eine hohe Zuverlässigkeit und Lebensdauer bei einfacher Montage und geringer Wartung gewünscht. Außerdem muss die Fertigung in großen Serien kostengünstig möglich sein.

Aus der US-PS 5.003.349 ist ein Stirlingmotor mit einer Brennkammer bekannt, die von einem ringförmigen Abgas/Luft-Wärmetauscher umgeben ist, der auch als Rekuperator bezeichnet wird und dazu dient, Abgaswärme im Gegenstrom auf Zuluft zu übertragen. Der Rekuperator ist von einer topfartigen Wärmeisolierung umgeben.

Für einen hohen Gesamtwirkungsgrad sollen Rekuperatoren möglichst hohe Effizienz haben. Soll der Gaserhitzer in kleinen Blockheizkraftwerken eingesetzt werden, ist ein kompakter, einfacher und robuster Aufbau erforderlich.

Davon ausgehend ist es Aufgabe der Erfindung, eine kompakten Wärmequelle mit gutem Wirkungsgrad zu schaffen.

Diese Aufgabe wird mit einer Wärmequelle nach Anspruch 1 gelöst:

Die Wärmequelle weist eine Brennkammer und einen Abgas/Luft-Wärmetauscher (Rekuperator) auf, dessen Durchmesser in einer Axialrichtung zunimmt. Der Rekuperator ist bspw. kegelförmig, kegelstumpfförmig, glockenförmig oder konisch. Die Glockenform hat den Vorteil, dass im kegelförmigen Teil Spaltweiten im Millimeterbereich (kleiner 5 mm, unter 2% des mittleren Rekuperatordurchmessers) mit Toleranzen von 10% der Spaltweite realisiert werden können, was eine gleichmäßige Strömung am Umfang des Rekuperators ermöglicht. Die Trennwand des Rekuperators wird zweckmäßigerweise innen und/oder außen mit Noppen versehen, die die Spaltweite festlegen. Trotz dieser für den konvektiven Wärmeübergang wichtigen Passgenauigkeit können die Einzelteile des Rekuperators wegen der Konizität der Glockenform einfach ineinander gesteckt und auch demontiert werden. Es sind α-Werte von bis zu 150 ... 250 W/k·m² möglich. Der Rekuperator kann kompakt und mit geringem Gewicht ausgeführt werden; er besteht nur aus wenigen einfachen, bspw. lediglich aus drei mehr oder weniger konischen Teilen und ist selbstjustierend.

In dem gewölbten Teil der Glocke findet der Wärmeübergang bei hohen Temperaturen überwiegend durch Strahlung statt; die Spaltweite spielt eine untergeordnete Rolle. Dagegen kann die erhebliche Ausdehnung der Rekuperatorteile in diesem Bereich durch die gewölbte Bauform am besten aufgefangen werden.

Die geringe Größe und präzise Einhaltung der Spaltgeometrie gestatten geringe Druckverluste auf der Abgas- und der Luftseite und intensiven Wärmeaustausch bei geringer Wärmetauscherfläche und somit geringem Volumen. Außerdem ergibt die Anordnung der Brennkammer wenigstens teilweise in dem von dem Rekuperator umschlossenen Innenraum einen kompakten Aufbau. Die Brennkammer kann sowohl als Brennkammer mit Flammen, als auch mit flammenloser Verbrennung ausgelegt werden, was besonders niedrige NOₓ und CO-Werte ermöglicht. Eine verstellbare Strahldüse gestattet den flammenlosen Betrieb auch bei Teillast. Hinsichtlich der flammenlosen Verbrennung wird auf die DE 44 19 332 A1 und die Patentanmeldung P 198 56 933 verwiesen.

Es ist vorteilhaft, die Brennkammer gegen den Rekuperator und den Rekuperator thermisch nach außen zu isolieren. Isoliermaterial kann in einem z.B. evakuierten Raum untergebracht sein, der in der äußeren Rekuperatorwand ausgebildet ist. Eine gewölbte Außenform schützt gegen Deformation durch Luftdruck. Während die Dicke der äußeren Isolierung zu dem kalten Ende des Rekuperators hin vorzugsweise abnimmt, nimmt die in Radialrichtung gemessene Dicke der inneren Isolierung bei einer vorteilhaften Ausführungsform in gleicher Richtung zu. Dadurch können bei geringem Bauvolumen die Wärmeverluste der Brennkammer und die Wärmeverluste des Rekuperators minimiert werden.

Die Brennkammer dient der Erzeugung eines hohen Temperaturniveaus, z.B. zur Durchführung chemischer Reaktionen, indem ein durch die Brennkammer geführtes Gasgemisch in dieser erhitzt wird. Die Reaktion wird schwach exotherm eingestellt (partielle Oxidation), um Wandverluste zu decken. Somit kann der Gaserhitzer ohne gesonderten Hochtemperatur-Wärmetauscher bspw. als Gaserzeuger für eine Brennstoffzelle dienen.

An die Brennkammer kann auch ein Hochtemperatur-Wärmeübertrager angeschlossen sein. Dieser kann durch ein oder mehrere Kanäle, bspw. Rohre, gebildet sein, die durch die Brennkammer oder einen Abgas durchströmten Raum führen. In der Brennkammer kann Hochtemperatur-Wärme z.B. für eine Wärmekraftmaschine abgenommen werden (Blockheizkraftwerktechnik). Außerdem kann das Gas ein chemisch zu veränderndes Gas sein. Der Gaserhitzer kann somit auch als Wasserstofferzeuger beim Dampfreformierungsprozess von fossilen Brennstoffen oder Methanol dienen.

Aus der Brennkammer abgezweigtes heißes Abgas kann einen Dampferzeuger beheizen, um z.B. für einen Dampf-Reformierungsprozess benötigten Dampf zu gewinnen. Durch Steuerung oder Regelung der Verteilung der Abgasströme zwischen Rekuperator und Dampferzeuger können die Verteilung der Energieflüsse und die Dampferzeugzeugung und der Dampf-Reformierungsprozess sehr schnell an wechselnde Lasten angepasst werden. Dies macht den Einsatz zur Wasserstofferzeugung zum Betrieb von Brennstoffzellen in Kraftfahrzeugen möglich. Beim Einsatz in der Kraft-Wärmekopplung ist ebenfalls eine variable Aufteilung von Wärmeerzeugung und Erzeugung mechanischer Energie möglich. So kann zusätzlich zu der von einem Stirlingmotor abgegebenen Wärme Heizwärme entnommen werden.

Zur Abnahme von Niedertemperaturwärme kann am kalten Ende des Rekuperators im oder am Abgaskanal eine Kühlschlange vorgesehen sein. Wegen des hier großen Durchmessers des Rekuperators ist die Strömungsgeschwindigkeit nicht zu groß, so dass wenige Rohrwindungen für einen guten Wärmeübergang genügen und der Druckverlust gering ist.

In unmittelbarer Nachbarschaft kann vor dem Eingang des Luftkanals ein Luftfilter vorgesehen werden. Es ergibt sich eine kompakte Baueinheit, die alle für den Gaserhitzer wesentliche Bauelemente enthält. Strömungsgeschwindigkeit und Druckverlust sind gering.

In der Brennkammer können Katalysatoren bspw. an den Wärmeverbrauchern (fluidführende Rohre) angeordnet werden. Damit erfolgt die Oxidation des Brennstoffs bei tieferen Temperaturen direkt auf den Wärmesenken (Röhrenerhitzern). Es kann sich ein verbesserter Wärmeübergang ergeben und ein Überhitzen der Katalysatoren verhindert werden. Weitere Katalysatoren können in den Albgaskanal des Rekuperators, bspw. auf der Innenwand des Rekuperators angeordnet werden um Emissionen zu vermindern.

In der Brennkammer kann eine elektrisch betriebene Wärmequelle wie bspw. eine Glühheizung vorgesehen sein. Dies ergibt einen einfachen Anfahrbetrieb und einen großen Regelbereich. Außerdem ist es möglich, die Brennkammer, insbesondere in Verbindung mit einem Katalysator und einer verstellbaren Strahldüse, für unterschiedliche Temperaturen und Lasten auszulegen, was ebenfalls das Anfahren erleichtern kann und einen guten Regelbereich ergibt. Die Strahldüse gestattet die Aufrechterhaltung einer internen Rezirkulation in der Brennkammer auch bei kleiner Last. Der Rekuperator eignet sich gut für eine Herstellung aus Keramik.

Es ergeben sich insgesamt folgende Vorteile:
― hoher Wirkungsgrad, d.h. geringe Abgas- und Wandverluste,
― niedrige verbrennungsbedingte Emissionen (NOₓ und CO)
― günstiges Regelverhalten,
― geringer Druckverlust für Gas und Verbrennungsluft,
― hohe Zuverlässigkeit und Lebensdauer,
― einfache Montage, geringe Wartung,
― kompakte Bauart, geringes Gewicht,
― kostengünstige Fertigungsmöglichkeit in großen Serien.

Weitere Einzelheiten vorteilhafter Ausführungsformen der Erfindung sind Gegenstand von Unteransprüchen oder der Zeichnung bzw. der Beschreibung zu entnehmen. In der Zeichnung sind Ausführungsbeispiele der Erfindung veranschaulicht. Es zeigen:
Fig. 1 einen Gaserhitzer in schematisierter längsgeschnittener Darstellung,
Fig. 2 den Gaserhitzer nach Figur 1, geschnitten entlang der Schnittlinie II-II in Figur 1, und
Fig. 3 eine abgewandelte Ausführungsform eines Gaserhitzers, in längs geschnittener Prinzipdarstellung.

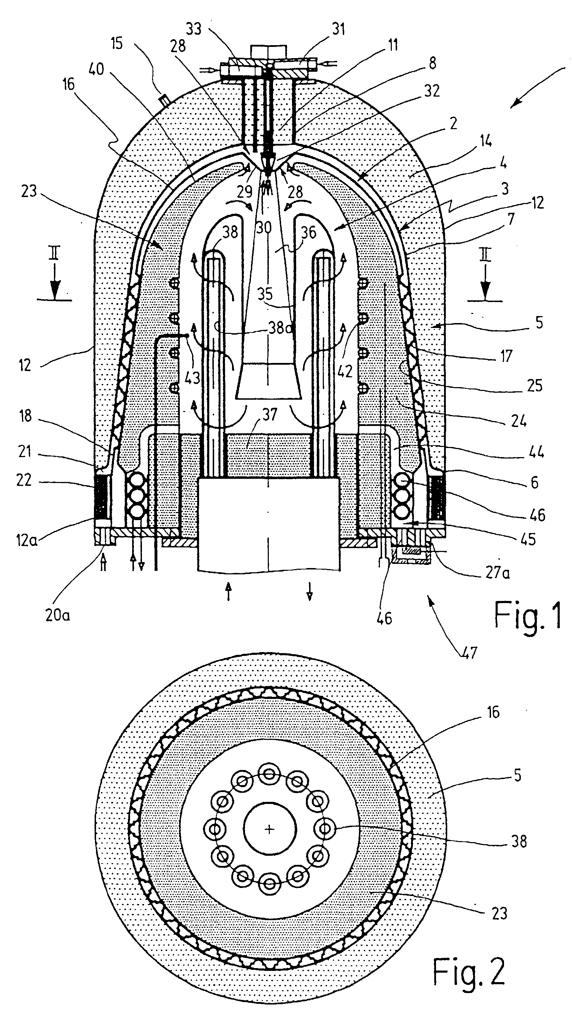

In Figur 1 ist ein als Wärmequelle dienender Gaserhitzer 1 veranschaulicht, der einen im Wesentlichen glockenförmiger Rekuperator 3 mit spaltförmigen Gaskanälen und eine Brennkammer 4 enthält, die in einem von dem Rekuperator 3 angeschlossenen Innenraum angeordnet ist.

Der Rekuperator 3 weist ein aus Blech ausgebildetes glockenförmiges Außenteil 5 auf, das sich ausgehend von einem unteren Rand 6 etwa konisch bis zu einer Übergangsstelle 7 erstreckt, von der ausgehend es kuppelförmig gewölbt zu einer Stirnöffnung 8 führt. In dieser ist ein Brenner 11 mit einer Strahldüse angeordnet. Von dem äußeren Ende der Stirnöffnung 8 führt eine Außenhaube 12 zu dem unteren Rand 6 des Außenteils 5 zurück. In dem Außenteil 5 ist ein geschlossener Hohlraum 14 ausgebildet, der mit einem wärmeisolierenden Stoff ausgefüllt ist. Über einen Pumpstutzen 15 kann der Innenraum 14 außerdem evakuiert werden, um die Wärmeisolierung zu verbessern.

Zu dem Rekuperator 3 gehört außerdem eine Trennwand 16, die in ihrer Form mit etwas reduziertem Durchmesser der Innenform des Außenteils 5 folgt. In ihrem konisch ausgebildeten Bereich ist die Trennwand 16 mit nach außen und nach innen vorspringenden Noppen oder anderweitigen geschlossenen Vorsprüngen 17 versehen, wobei die äußeren Vorsprünge 17 an dem Außenteil 5 anliegen. Die Trennwand 16 stützt sich mit ihrem unteren Rand 18 einem Sockel 20 bspw. aus Aluminiumdruckguss ab. Die Trennwand 16 kann aus Metall oder ganz oder teilweise aus Keramik bestehen. Z.B. kann die Trennwand 16 einschließlich der Vorsprünge 17 im Schlickergussverfahren hergestellt werden. Auch kann sie aus eine konischen Niedertemperaturabschnitt aus Metall und einem kuppelförmigen Keramikteil zusammengesetzt sein.

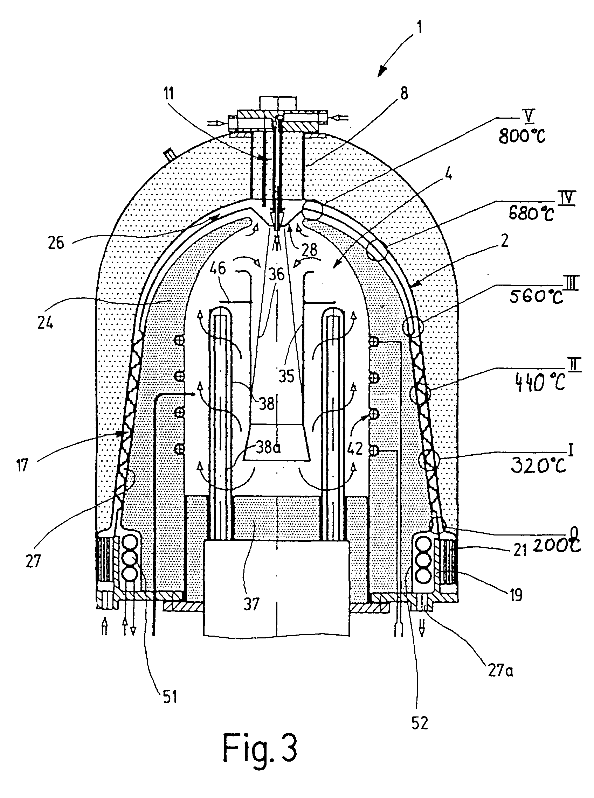

Zwischen dem letzten Teil der Trennwand 16 oder einem rohrförmigen Fortsatz 19 (Fig. 3) des Sockels 20 und seinem Außenumfang sowie einem Fortsatz 12a der Außenglocke 12 ist ein ringförmiger Einlassraum 21 ausgebildet, in dem ein Luftfilter 22 angeordnet ist. Der relativ große Strömungsquerschnitt ermöglicht geringe Druckverluste. In den Einlassraum 21 führt wenigstens eine Einlassöffnung 20a, an die z.B. ein Gebläse angeschlossen ist.

Zu dem Rekuperator 3 gehört außerdem ein Innenteil 23. Es weist wenigstens in dem konischen Rekuperatorbereich eine kegelstumpfförmige oder konische Kontur auf. Im weiteren Verlauf passt sie sich der kuppelförmigen Wölbung der hier vorzugsweise ohne Vorsprünge ausgebildeten Trennwand 16 an. Das Innenteil 23 kann ein Isolierkörper 24 mit einem Blechmantel 25 sein.

Während die Dicke des äußeren Isolators (Innenraum 14), von dem warmen Ende des Rekuperators 3 zu seinem kalten Ende hin abnimmt, nimmt die Dicke des Isolierkörpers 24 in gleiche Richtung zu. Die Gesamtdicke der inneren und der äußeren Isolierung, d.h. die Summe der rechtwinklig zur Wand gemessenen Dicke des Isolierkörpers 24 und des Außenteils 5 ist jedoch vorzugsweise im Wesentlichen konstant.

Die nach äußeren Vorsprünge 17 der Trennwand 16 stützen das Außenteil 5 ab und legen einen spaltförmigen, sich von dem Einlassraum 21 weg erstreckenden Luftkanal 26 fest. Die inneren Vorsprünge 17 stützen sich auf dem Innenteil 23 ab und legen einen spaltförmigen Abgaskanal 27 fest. Die Gesamtdicke des Rekuperators 3 ist durch die Höhe der Vorsprünge 17 festgelegt. Der Abgaskanal 27 führt zu einem an dem Sockel 20 vorgesehenen Abgasanschluss 27a.

Der Isolierkörper 24 umschließt die Brennkammer 4 und weist an seinem oberen Ende eine Durchgangsöffnung 28 auf. In diese ragt ein kegelförmiger Vorsprung 29 der Trennwand 16. Der Vorsprung 29 weist eine Öffnung 30 auf, durch die Luft und Brennstoff in die Brennkammer 4 gelangen können. Dazu ist der in den Fortsatz 9 eingesetzte Brenner 11 mit einem Brennstoffkanal 31 und mit einem Luftkanal 33 versehen, die bis zu einer kegelförmigen Düse 32 führen.

Der Düse 32 gegenüberliegend ist in der Brennkammer 4 ein Leitrohr 35 zur Herbeiführung einer großräumigen Zirkulationsströmung in der Brennkammer 4 angeordnet. Die Strömung ist durch Pfeile markiert. Das Leitrohr 35 wirkt als Diffusor und ist an seinem von der Düse 32 abliegenden Ende trichterförmig erweitert. Der von der Düse 32 ausgehende kegelförmige Brennstoffluftstrahl 36 reißt hier in der Brennkammer 4 vorhandenen Gase mit und mischt sich mit diesen. Die großräumige Zirkulation in der Brennkammer 4 ermöglicht die flammlose Oxidation bei entsprechender Auslegung der Düse 32 auch bei Teillast.

Sockelseitig ist die Brennkammer durch einen zylindrischen isolierenden Zentriersockel 37 abgeschlossen, der von dem Innenteil 23 übergriffen ist. Dieses stützt sich seinerseits wie auch der Zentriesockel an dem Sockel 20 ab. Die Brennkammer 4 ist somit allseitig isoliert.

In die Brennkammer 4 ragen endseitig geschlossene Rohre 38 zur Wärmeabnahme. In diesen sind endseitig offene Rohre 38a angeordnet, die der Zuführung eines zu erwärmenden Mediums dienen. Die Rohre 38, 38a bilden Kanäle zur Abnahme von Hochtemperatur-Wärme und sind bspw. von dem Arbeitsmedium einer Kraftmaschine oder von einem anderen, auf hohe Temperaturen zu erwärmenden Gas durchströmt. Bedarfsweise können auch andere Rohrkonfigurationen Anwendung finden. Auf der Oberfläche der Rohre 38 kann ein Katalysator angeordnet sein, um die Oxidation in der Brennkammer 4, insbesondere beim Anfahren, zu fördern. Außerdem kann an dem kuppelförmig gewölbten Bereich des Isolierkörpers 24 an dessen der Trennwand 16 zugewandten Seite ein Katalysator 40 angeordnet sein, um das Abgas nachzubehandeln.

Die Brennkammer 4 ist im vorliegenden Ausführungsbeispiel mit einer Elektroheizung 42 versehen, die durch in der Kammerwand vorgesehene Heizwendeln gebildet wird. Diese dienen insbesondere zum Erwärmen der Brennkammer 4 vor der Zündung. Außerdem kann ein Thermoelement 43 zur Überwachung des Betriebs der Brennkammer 4 vorgesehen sein.

Optional kann aus der Brennkammer 4 ein Abgaskanal 44 unter Umgehung des Rekuperators 3 herausführen. Der Abgaskanal 44 führt zu einer Wärmetauscherkammer 45, in der ein (Niedertemperatur-) Wärmeübertrager 46 (Rohrschlange) angeordnet ist. Dieser kann bspw. der Dampferzeugung dienen. Aus der Wärmetauscherkammer 45 führt ein Abgasanschluss 46 heraus. Die Abgasanschlüsse 27a, 46 sind an ein 2-Wege-Regulierventil 47 (oder einen entsprechenden Schieber) angeschlossen, der die Größe der durch die Abgaskanäle 27, 44 gehenden Abgasströme und somit die Verteilung der Energieflüsse reguliert.

Figur 2 veranschaulicht den Gaserhitzer 1 nach Figur 1 nochmals im Schnitt. Es ist hier insbesondere ersichtlich, wie sich das Außenteil 5 über die Trennwand 16 an dem Innenteil 23 abstützt.

Der Betrieb des Gaserhitzers 1 ist mit Bezug auf Figur 1 wie folgt:

Zum Starten des Gaserhitzers 1 wird zunächst die Brennkammer 4 mit der Elektroheizung 42 erwärmt. Ist eine Mindesttemperatur erreicht, wird über den Brenner 11 Gas oder ein Gas-Luft-Gemisch in die Brennkammer 4 geblasen. Bedarfsweise kann der Gaserhitzer 1 auch mit einer gezündeten Flamme gestartet und hochgefahren werden. Sind an den Rohren 38 Katalysatoren vorhanden, unterstützen diese die nun einsetzende Reaktion. Mit zunehmender Temperatur kann auch mehr Gas zugeführt werden, bis die Brennkammer 4 ihre Solltemperatur erreicht hat.

Von dem Brenner 11 geht ein Brennstoff-Luft-Gemischstrahl aus, der in das Rohr 35 eintritt. Er treibt eine Ringströmung in der Brennkammer 4 an und vermischt sich mit diesem in dem Rohr 35. Es kommt hier zur vorzugsweisen flammenlosen Oxidation des Gas-Luft-Gemischs. Die Verbrennungsprodukte verlassen die Brennkammer 4 durch die Öffnung 28 mit z.B. 900°C bis 1000°C. Der Rekuperator 3 erwärmt die in dem Luftkanal 28 zuströmende Luft auf etwa 900°C. Der weitere Temperaturverlauf ist in Fig 3 veranschaulicht. Die Abgase erfahren in dem Rekuperator 3 eine Abkühlung auf kleiner 200°C.

Der Gaserhitzer 1 wird anhand der Temperaturen der Brennkammer4 und des Wärmeübertragers 46 gesteuert oder geregelt. Eine erste Regelschleife hält durch Beeinflussung der Brennstoff- und Luftzufuhr die Temperatur der Brennkammer 4 auf Sollwert, unabhängig davon, ob die Abgase ganz, teilweise oder gar nicht durch den Rekuperator 3 geleitet werden. Eine zweite Regelschleife regelt die Temperatur des Wärmeübertragers 46 durch Einstellung des Ventils 47. Soll die gesamte erzeugte Wärme als Hochtemperatur-Wärme abgenommen werden, schließt die Regeleinrichtung mit dem Ventil 47 den über den Wärmeübertrager 46 führenden Weg. Soll hier jedoch etwas Wärme entnommen werden, öffnet die Regeleinrichtung diesen Weg bedarfsentsprechend. Die dadurch abnehmende Luftvorwärmung für die Brennkammer 4 wird durch erhöhte Brennstoffzufuhr ausgeglichen. Die Steuerung oder Regelung ist somit sehr einfach und reaktionsschnell an wechselnde Lasten anpassbar.

Die Abgase verlassen den Rekuperator 3 mit einer Restwärme von kleiner 200°C. Zur Nutzung derselben kann an dem kalten Ende des Abgaskanals 27 ein weiterer Wärmetauscher 51 vorgesehen sein (Fig. 3). Der Isolierkörper 24 kann dazu mit einer ringförmigen Aussparung 52 versehen sein, die etwa die Höhe des ringförmigen Ansatzes 19 aufweist. Die so gebildete Ringkammer kann den Wärmetauscher 51 aufnehmen, an den bspw. eine Gebäudeheizung oder ein anderweitiger Wärmeverbraucher für Niedrigtemperaturwärme angeschlossen ist.

Wenn eine anderweitige Wärmesenke existiert, kann der Hochtemperatur-Wärmetauscher, der durch die Rohre 38, 38a gebildet wird, auch entfallen. Die Wärmeabgabe kann auf beliebigem anderen Weg erfolgen.

Bei einer kompakten Wärmequelle 1 umgibt ein glocken- oder konusförmiger Rekuperator 3 die Brennkammer 4. Der Rekuperator 3 besteht aus axial gegeneinander verspannten Teilen 13, 16, 24, so dass die ständige Anlage einer mit Vorsprüngen 17 versehenen Trennwand 16 sowohl an einer glockenförmigen Außenwand 5 als auch an einer glockenförmigen Innenwand 23 sichergestellt ist.

### Anwendungsbeispiel:

### Wärmequelle für einen Stirling-Motor

- Wärmebedarf des Rohrerhitzers:: 12 kW
- Temperatur des erhitzten Gases:: 700°C
- Temperatur in der Brennkammer:: ca. 1000°C
- zugeführte Brennstoffenergie:: ca. 14 kW
- Wirkungsgrad der Beheizung:: ca. 86%
- Luftvorwärmung:: ca. 900°C
- Abgastemperatur:: ca. 150°C
- Noₓ im Abgas (flammenloser Betrieb):: < 20 ppm

### Abmessungen

### Brennkammer

- Außen-Durchmesser:: 400 mm
- Außen-Länge:: 400 mm
- Innen-Durchmesser:: 200 mm
- Innen-Länge:: 200 mm
- Innen-Volumen:: 6,3 dm³

### Rekuperator

- mittlerer Durchmesser:: 300 mm
- Konizität:: 5°
- Spaltweite:: 2 mm

## Patentansprüche

1. Wärmequelle (1),
mit einer Brennkammer (4), zur Erzeugung von Wärme mit einem hohen Temperaturniveau,
mit einem im Wesentlichen rotationssymmetrisch ausgebildeten Abgas/Luft-Wärmetauscher (3), der an die Brennkammer (4) angeschlossen ist,
dadurch gekennzeichnet,
dass der Abgas/Luft-Wärmetauscher (3) einen Durchmesser aufweist, der in seiner Axialrichtung zunimmt, und
dass die Brennkammer (4) zumindest teilweise in einem von dem Abgas/Luft-Wärmetauscher (3) umschlossenen Innenraum angeordnet ist.

2. Wärmequelle nach Anspruch 1, dadurch gekennzeichnet, dass der Abgas/Luft-Wärmetauscher (3) kegel- oder glockenförmig ausgebildet ist.

3. Wärmequelle nach Anspruch 2, dadurch gekennzeichnet, dass der Abgas/Luft-Wärmetauscher (3) eine Außenwand (5) und eine Innenwand (23) aufweist, zwischen denen eine Trennwand (16) angeordnet ist, und dass die Trennwand (16) auf beiden Seiten mit Vorsprüngen (17) versehen ist, mit denen sie sowohl an der Innenwand (23) als auch an der Außenwand (5) anliegt, wobei zwischen der Innenwand und der Außenwand ein Abstand eingehalten ist, der weniger als 2%, vorzugsweise weniger als 1% des Durchmessers des Abgas/Luft-Wärmetauschers (3) beträgt.

4. Wärmequelle nach Anspruch 1, dadurch gekennzeichnet, dass die Brennkammer (4) in einem von dem Abgas/Luft-Wärmetauscher (3) umschlossenen Innenraum angeordnet und von diesem durch eine innere Wärmeisolierung (24) getrennt ist und dass der Abgas/Luft-Wärmetauscher (3) an seiner Außenseite mit einer äußeren Wärmeisolierung (14) versehen ist, und dass die Wanddicke der äußeren Wärmeisolierung (14) in einer Richtung abnimmt, in der die Wanddicke der inneren Wärmeisolierung (24) zunimmt.

5. Wärmequelle nach Anspruch 1, dadurch gekennzeichnet, dass die Brennkammer (4) und ein in oder an der Brennkammer (4) angeordneter Brenner (11) zum Betrieb mit flammenloser Oxidation eingerichtet sind.

6. Wärmequelle nach Anspruch 1, dadurch gekennzeichnet, dass die Brennkammer (4) mit einem Hochtemperatur-Wärmeübertrager (37) verbunden ist.

7. Wärmequelle nach Anspruch 6, dadurch gekennzeichnet, dass der Hochtemperatur-Wärmeübertrager in der Brennkammer (4) in Form wenigstens eines durch die Brennkammer (4) führenden Fluid durchströmten Kanals vorgesehen ist.

8. Wärmequelle nach Anspruch 1 oder 7, dadurch gekennzeichnet, dass in der Brennkammer (4) ein Katalysator (39) vorgesehen ist, der vorzugsweise an oder auf dem Hochtemperatur-Wärmeübertrager angeordnet ist.

9. Wärmequelle nach Anspruch 1, dadurch gekennzeichnet, dass die Wärmequelle (1) an einen Stirlingmotor oder eine Gasturbine angeschlossen ist.

10. Wärmequelle nach Anspruch 1, dadurch gekennzeichnet, dass der Hochtemperatur-Wärmeübertrager von einem Fluid durchströmt ist, das eine endotherme chemische Umwandlung durchläuft.

11. Wärmequelle nach Anspruch 1, dadurch gekennzeichnet, dass von der Brennkammer (4) ein Abgaskanal durch den Abgas/Luft-Wärmetauscher (3) und ein weiterer Abgaskanal zu einem Wärmeübertrager führt, wobei die Abgaskanäle vorzugsweise steuerbar sind.

12. Wärmequelle nach Anspruch 1, dadurch gekennzeichnet, dass der Rekuperator (3) und/oder dessen Trennwand (17) wenigstens teilweise, vorzugsweise ganz aus Keramik besteht.
